# EUROPEAN PATENT APPLICATION

(11) **EP 0 865 735 A1**
(43) Date of publication of application: **23.09.1998**
(21) Application number: 98200663.7
(22) Date of filing: 04.03.1998
(51) Int. Cl.: A23F 5/24, A23L 2/46, A23L 3/16, A23L 3/10

(54) **Process for sterilising beverages**

(30) Priority: 19.03.1997 US 820194
(71) Applicant: SOCIETE DES PRODUITS NESTLE S.A., 1800 Vevey (CH)
(72) Inventor: Clyde, Gene Franck, New Milford, CT 06776 (US)

(57) **Abstract**

A process for sterilising a ready-to-drink beverage. A liquid beverage mix is rapidly heated to a raised temperature above about 135°C and maintained at the raised temperature for a time less than about 2 minutes but sufficient for providing an Fₒ value of at least about 60. The heated liquid beverage mix is then cooled to a temperature below about 100°C and filled into containers. The containers are then subjected to retorting at conditions for providing an Fₒ value of up to about 10. The ready-to-drink beverage may be vended warm without microbial spoilage.

## Description

This invention relates to a process for sterilising a ready-to-drink beverage; especially a beverage which is to be vended warm. The invention also relates to the sterilised beverage so produced.

Ready-to-drink beverages may contain micro-organisms; including toxic, pathogenic micro-organism and their spores. If present in a beverage, these micro-organisms cause spoilage problems during storage. Also, in the case of toxic, pathogenic micro-organisms and their spores, the micro-organism pose health and safety risks. Hence, the beverage must be processed in a manner which destroys the micro-organisms.

Usually destruction of the micro-organisms is carried out by subjecting the beverage to thermal treatment. Ordinarily, the ready-to-drink beverages are subjected to retorting, once they have been sealed into containers, to achieve a sterilisation factor, or Fₒ value, of about 3 to 5. The Fₒ value is the equivalent time in minutes that the beverage is held at a temperature of 121°C.

For beverages which are to be vended cold, sterilisation to achieve an Fₒ value of about 3 to 5 is more than adequate. However, many beverages are vended warm; for example at about 50°C to 60°C. At these temperatures, it is found that certain thermophilic, spore forming, micro-organisms, which survive the standard sterilisation processes, cause spoilage in the beverages. These micro-organisms do not cause problems at lower temperatures.

To destroy these micro-organisms using thermal processing, the beverages must be subjected to retorting to achieve and Fₒ value of about 70. Apart from significantly increasing retort times, thermal processing to this level often adversely affects the flavour of the product. For example, coffee beverages which have been subjected to retorting to a Fₒ value of about 70 often have acidic, harsh, burnt and aggressive flavours. Further, if the coffee beverage contains milk, cooked "retort" flavours are noticeable.

To avoid these problems, it is now common to use sucrose fatty acid esters as anti-microbial agents. For example, the Derwent abstract of Japanese patent application J60-199345 describes sucrose fatty acid ester which has a monoester content of above about 70% and the fatty acids of which are made up of 70% palmitic acid and 30% stearic acid. These sucrose fatty acid esters, when used at levels of about 0.2% by weight, reduce the retorting necessary to a Fₒ value of about 30. However, it is found that beverages containing sucrose fatty acid esters also have unpleasant notes in their flavour profile. Also, the sucrose fatty acid esters may themselves be a source of thermophilic micro-organisms.

It is also possible avoid the off flavours associated with retorting to a Fₒ value of about 70 by aseptically processing and filling the beverages. However. aseptic processing may only be carried out using a limited range of containers. Also, throughputs are low and capital investment is high.

Therefore it is an object of this invention to provide a versatile process for sterilising a ready-to-drink beverage such that the beverage may be safely vended warm and such that it retains a relatively good flavour profile.

Accordingly, in one aspect, this invention provides a process for sterilising a ready-to-drink beverage, the process comprising:
providing a liquid beverage mix;
rapidly heating the liquid beverage mix to a raised temperature above about 135°C and maintaining the liquid beverage at the raised temperature for a time less than about 2 minutes but sufficient for providing an Fₒ value of at least about 60;
cooling the liquid beverage mix to a temperature below about 100°C and filling the liquid beverage mix into containers; and
subjecting the containers to retorting at conditions for providing an Fₒ value of up to about 10.

It is surprisingly found that ready-to-drink beverages which are subjected to very high temperatures for a short time but sufficient for providing an Fₒ value of at least about 60 and then to a short retorting step, have a good flavour profile. Further, the beverages are not susceptible to microbial spoilage; even when stored at temperatures above about 50°C. The process also significantly reduces sterilisation time, and hence processing time.

Preferably, the liquid beverage mix is rapidly heated to a raised temperature of about 140°C to about 150°C; for example about 145°C. The liquid beverage mix is preferably held at the raised temperature for a time of about 5 seconds to about 60 seconds; for example about 50 seconds. The liquid beverage mix may be held at the raised temperature to provide an Fₒ value of about 65 to about 75; for example about 65 to about 70.

The liquid beverage mix is preferably cooled to about 80°C to about 95°C and then filled into the containers at this temperature.

The containers are preferably retorted at a temperature of about 110°C to about 125°C; for example to a Fₒ value of about 3 to about 4.

In another aspect, this invention provides a ready-to-drink beverage produced by the process defined above. Preferably, the ready-to-drink beverage is a coffee beverage.

Embodiments of the invention are now described, by way of example only. The invention provides a process of sterilising a ready-to-drink beverage. The ready-to-drink beverage may be any beverage which is suitable for warm vending. Examples are suitable beverages are black coffee beverages, whitened coffee beverages, chocolate beverages, and malted beverages.

Initially, a liquid beverage mix must be provided. The liquid beverage mix is substantially identical to the final beverage except that it has not yet been sterilised. Usually the liquid beverage mix is made up of water, sugar or other sweetening agent, and a flavouring agent. Milk or milk solids may also be included into the liquid beverage mix. The flavouring agent may be coffee, cocoa, chocolate mixes, malted cereals, etc. The liquid beverage mix may be prepared by mixing together all the dry ingredients, blending in the all liquid ingredients, and the subjecting the mixture to homogenisation.

The liquid beverage mix is then rapidly heated to a temperature above about 135°C; for example to about 140°C to about 150°C. This may be carried out in a suitable heat exchanger or by direct injection of steam into the liquid beverage mix. Suitable heat exchangers are plate heat exchangers, tubular heat exchangers and scraped surface heat exchangers; plate heat exchangers being particularly suitable.

The liquid beverage mix is then held at the raised temperature for a time less than about 2 minutes but sufficient to provide a Fₒ value of at least about 60. Depending upon the temperature to which the liquid beverage is heated, the liquid beverage is conveniently held at the temperature for about 5 seconds to about 60 seconds. The Fₒ value reached is preferably about 65 to about 75.

The liquid beverage mix is then rapidly cooled to a temperature below about 100°C; for example to about 80°C to about 95°C. This may be conveniently accomplished by using a suitable heat exchanger or by flash cooling the beverage. Again a plate heat exchanger is a particularly suitable heat exchanger. Flash cooling is especially suitable if the liquid beverage mix was heated using direct injection of steam since the introduced steam may then be flashed off. Otherwise the increase in water content must be accounted for when preparing the liquid beverage mix.

If needed and not added earlier, suitable buffers may be added at this point. Usually buffers will be required if the beverage contains an acid flavouring agent such as coffee, and milk or milk solids. Examples of suitable buffers include sodium and potassium bicarbonate, di-sodium and di-potassium phosphates, and sodium and potassium citrates. Various combinations of these buffers may also be used. The buffering system used will depend largely upon regulations in the various countries. Further flavouring agents and sweeteners may also be added at this point.

The liquid beverage mix is then filled into containers such as cans or bottles in the usual manner. The containers are then sealed and subjected to retorting. The retorting may be carried out in a batch retort using hot water or steam or may be carried out in a continuous fashion using a hydrostatic retort or a spiral continuous cooker; for example. The retort is preferably carried out at a temperature of about 110°C to about 125°C and for a time sufficiently short such that the Fₒ value does not exceed about 10; for example about 3 to about 4.

The ready-to-drink beverage thus obtained may be vended cold or warm. It is found that thermophilic, spore forming, micro-organisms do not survive in the beverage and microbial spoilage problems do not occur; even if the beverage is vended warm. Further, it is found that the beverage has a good flavour with very little of the cooked, off notes which are characteristic of beverages which have been retorted to Fₒ values of above 65. Further, none of the off notes associated with the use of sucrose fatty acid esters arise.

### Example 1

Three different coffee beverages are prepared. The components of each beverage are as follows:

| **Beverage** | **Coffee powder %** | **Milk %** | **Sweetener %** |
|---|---|---|---|
| 1 | 0.8 | 30 | 5 |
| 2 | 1.4 | 7.9* | 5.5 |
| 3 | 1.1 | - | 4.7 |

| | | | |
|---|---|---|---|
| * mixture of whole and skimmed milk | | | |

The dry ingredients of each beverage are mixed together and the liquid ingredients blended in. Water makes up the remaining component of each beverage. The beverages are then heated to about 65°C and homogenised by two passes through a homogeniser.

Each beverage is then processed in three different ways:
- In control method A, the homogenised beverages are heated to about 90°C and then filled into cans and the cans sealed. The cans are then retorted at about 120°C for about 5 minutes to provide an Fₒ of about 5.
- In control method B, sucrose fatty acid ester is blended into each homogenised beverage. The beverages are heated to about 90°C and then filled into cans and the cans sealed. The cans are then retorted at about 120°C for about 30 minutes to provide an Fₒ of about 30.
- In method 1, the homogenised beverages are rapidly heated to about 145°C in a plate heat exchanger and held at this temperature for 55 seconds to obtain a Fₒ value of about 65. The heated beverages are then cooled to about 90°C in a plate heat exchanger. The cooled beverages are filled into cans and the cans sealed. The cans are then retorted at about 120°C to obtain a Fₒ value of about 4.

The beverages are then presented to a trained panel. The flavour characteristics of each beverage are then determined by the panel. The results are as follows:

| **Beverage** | **Control Method A** | **Control Method B** | **Method 1** |
|---|---|---|---|
| 1 | Beverage has a flat flavour lacking in coffee notes but with off notes noticeable. Milky, caramelised notes are present. | Beverage has a flat, cooked flavour lacking in coffee notes. Caramelised notes are present | Beverage has a clean, coffee flavour with some bitter notes. Some metallic, milky notes are present. |
| 2 | Beverage has an aromatic, burnt flavour which is flat and unbalanced. Some caramel and metallic notes are present. | Beverage has a very bitter, burnt coffee flavour. Medicinal, smoky and off notes are noticeable. The flavour is totally unacceptable | Beverage has a clean, coffee flavour with some bitter, smoky and metallic notes. |
| 3 | Beverage has a harsh, burnt, unbalanced, cooked flavour. Sulphur, rubbery and bitter notes are present | Beverage has an astringent but flat flavour. Sulphur, rubbery, ash and bitter notes are present | Beverage has a clean, coffee flavour with no off notes. |

The beverages produced by method 1 are considered to be the best, followed by those of control method A. The beverages of control method B are considered the worst. However, when stored at 55°C, the beverages of control method A are susceptible to microbial spoilage. No spoilage is detected in the beverages produced by method 1 and control method B.

### Example 2

Two different coffee beverages are prepared. The components of each beverage are as follows:

| **Beverage** | **Coffee powder %** | **Milk %** | **Sweetener %** |
|---|---|---|---|
| 4 | 1.1 | 30 | 5 |
| 5 | 1.1 | 25 | 5 |

The dry ingredients of each beverage are mixed together and the liquid ingredients blended in. Water makes up the remaining component of each beverage. The beverages are then heated to about 65°C and homogenised by two passes through a homogeniser.

Each beverage is then processed in two different ways:
- In control method C, the homogenised beverages are heated to about 90°C and then filled into cans and the cans sealed. The cans are then retorted at about 127°C to provide an Fₒ of about 70.
- In method 1, the homogenised beverages are rapidly heated to about 145°C in a plate heat exchanger and held at this temperature for 55 seconds to obtain a Fₒ value of about 65. The heated beverages are then cooled to about 90°C in a plate heat exchanger. The cooled beverages are filled into cans and the cans sealed. The cans are then retorted at about 120°C to obtain a Fₒ value of about 4.

The beverages are then presented to a trained panel. The flavour characteristics of each beverage are then determined by the panel. The flavour of beverages 4 and 5, when produced by method 1, are acceptable with a relatively clean coffee flavour. Some cooked notes are detected. The flavour of beverages 4 and 5, when produced by control method C, are unacceptable with acidic, harsh, burnt and aggressive notes. Cooked notes are present.

## Claims

1. A process for sterilising a ready-to-drink beverage, the process comprising:
providing a liquid beverage mix;
rapidly heating the liquid beverage mix to a raised temperature above about 135°C and maintaining the liquid beverage at the raised temperature for a time less than about 2 minutes but sufficient for providing an Fₒ value of at least about 60;
cooling the liquid beverage mix to a temperature below about 100°C and filling the liquid beverage mix into containers; and
subjecting the containers to retorting at conditions for providing an Fₒ value of up to about 10.

2. A process according to claim 1 in which the liquid beverage mix is rapidly heated to a raised temperature of about 140°C to about 150°C.

3. A process according to claim 1 or claim 2 in which the liquid beverage mix is held at the raised temperature for a time of about 5 seconds to about 60 seconds.

4. A process according to any of claims 1 to 3 in which the liquid beverage mix is held at the raised temperature to provide an Fₒ value of about 65 to about 75.

5. A process according to any of claims 1 to 4 in which the liquid beverage mix is cooled to about 80°C to about 95°C.

6. A process according to any of claims 1 to 5 in which the containers are retorted at a temperature of about 110°C to about 125°C.

7. A process according to any of claims 1 to 6 in which the containers are retorted to a Fₒ value of about 3 to about 4.

8. A process for sterilising a ready-to-drink beverage, the process comprising:
providing a liquid beverage mix;
rapidly heating the liquid beverage mix to a raised temperature of about 140°C to about 150°C and maintaining the liquid beverage at the raised temperature for a time of about 5 seconds to about 60 seconds for providing an Fₒ value of at least about 60;
cooling the liquid beverage mix to a temperature below about 100°C and filling the liquid beverage mix into containers; and
subjecting the containers to retorting at conditions for providing an Fₒ value of up to about 10.

9. A process according to claim 8 in which the liquid beverage mix is held at the raised temperature to provide an Fₒ value of about 65 to about 75.

10. A process according to claim 8 or claim 9 in which the liquid beverage mix is cooled to about 80°C to about 95°C.
